# EUROPÄISCHE PATENTSCHRIFT

(11) **EP 3 691 815 B1**
(45) Veröffentlichungstag und Bekanntmachung des Hinweises auf die Patenterteilung: **09.08.2023**
(21) Anmeldenummer: 18792348.7
(22) Anmeldetag: 24.09.2018
(51) Int. Cl.: B22F 1/065, B22F 1/142, B22F 10/25, B22F 10/28, B22F 10/34, B33Y 10/00, B33Y 70/10, B33Y 80/00, C22C 1/04, C22C 1/056, C22C 27/04, B22F 5/00, B22F 10/366, B22F 10/38, C22C 32/00

(54) **ADDITIV GEFERTIGTES BAUTEIL UND HERSTELLUNGSVERFAHREN DAVON**
ADDITIVE MANUFACTURED COMPONENT AND METHOD OF MANUFACTURING THEREOF
COMPOSANT PRODUIT PAR FABRICATION ADDITIVE ET PROCÉDÉ DE PRODUCTION DE CE COMPOSANT

(30) Priorität: 05.10.2017 AT 22217 U
(43) Veröffentlichungstag der Anmeldung: 12.08.2020
(73) Patentinhaber: Plansee SE, 6600 Reutte (AT)
(72) Erfinder: LEICHTFRIED, Gerhard, 6600 Reutte (AT); TABERNIG, Bernhard, 6600 Reutte (AT)
(74) Vertreter: Ciesla, Bettina
(86) Internationale Anmeldenummer: PCT/AT2018/000077
(87) Internationale Veröffentlichungsnummer: WO 2019/068117

(56) Entgegenhaltungen:
- CN-A- 103 074 532
- CN-A- 106 001 545
- US-A1- 2017 252 787
- DIANZHENG WANG ET AL: "Dense Pure Tungsten Fabricated by Selective Laser Melting", APPLIED SCIENCES, Bd. 7, Nr. 4, 23. April 2017 (2017-04-23), Seite 430, XP055533230, DOI: 10.3390/app7040430
- DIANZHENG WANG ET AL: "Densification and crack suppression in selective laser melting of pure molybdenum", MATERIALS & DESIGN, Bd. 129, 1. September 2017 (2017-09-01), Seiten 44-52, XP055533234, AMSTERDAM, NL ISSN: 0264-1275, DOI: 10.1016/j.matdes.2017.04.094

## Beschreibung

Die vorliegende Erfindung betrifft ein Bauteil, das eine Vielzahl einzelner, über ein Additives Fertigungsverfahren durch einen energiereichen Strahl zu einer festen Struktur zusammengeschmolzener Pulverpartikel aus Molybdän (Mo), einer Mo-basierten Legierung, Wolfram (W) oder einer W-basierten Legierung umfasst. Ferner betrifft die Erfindung ein Additives Fertigungsverfahren zur Herstellung eines Bauteils und die Verwendung eines Pulvers für ein Additives Fertigungsverfahren.

Mo, W und deren Legierungen werden auf Grund des hohen Schmelzpunktes, des niedrigen thermischen Ausdehnungskoeffizienten und der hohen Wärmeleitfähigkeit für unterschiedliche Hochleistungsanwendungen, wie zum Beispiel für Röntgenanoden, Wärmesenken, Hochtemperatur-Heizzonen, Strahlruder, Strangpressmatrizen, Formenteile für den Spritzguss, Heißkanaldüsen, Widerstandsschweißelektroden oder Komponenten für lonenimplantieranlagen eingesetzt. Zudem weisen diese Elemente eine hohe Dichte auf, wodurch ein gutes Abschirmungsverhalten von elektromagnetischer und Partikelstrahlung gewährleistet ist. Bedingt durch die vergleichsweise niedrige Duktilität und die hohe DBTT (Ductile-Brittle-Transition-Temperature) sind die Bearbeitungseigenschaften sowohl für spanende, als auch spanlose Verfahren ungünstig. Zudem ist mit Ausnahme von Mo-Re und W-Re die Schweißeignung dieser Werkstoffe schlecht. Ein großtechnisches Verfahren zur Herstellung von Bauteilen aus diesen Werkstoffen ist die pulvermetallurgische Herstellungsroute, bei der entsprechende Ausgangspulver gepresst und gesintert werden.

Die mit Additiven Fertigungsverfahren erreichbaren Möglichkeiten zur geometrischen Bauteilausführung übersteigen jene von konventionellen Verfahren bei Weitem. Insbesondere bei Materialien wie Mo, W und deren Legierungen ist das Additive Fertigungsverfahren im Besonderen vorteilhaft, da diese Werkstoffe, im Vergleich zu anderen metallischen Werkstoffen, mit gängigen, herkömmlichen Fertigungsmethoden deutlich schwieriger zu bearbeiten sind. Bei der Additiven Fertigung von metallischen Werkstoffen werden meist Pulver, seltener auch Drähte, als Ausgangsmaterial verwendet. Für metallische Werkstoffe haben sich mehrere Prozesse etabliert, wie Selektives Lasersintern (SLS), bei welchem lagenweise aufgebrachtes Pulver örtlich mittels eines Laserstrahl gesintert wird, Selektives Laserschmelzen (SLM) und selektives Elektronenstrahlschmelzen (SEBM), bei welchen lagenweise aufgebrachtes Pulver örtlich aufgeschmolzen wird und Laser Metal Deposition (LMD), bei welchem ein über eine Düse zugeführtes Pulver geschmolzen wird. Additive Fertigungsverfahren benötigen keine Span- oder Formwerkzeuge, was eine kostengünstige Fertigung von Bauteilen mit geringer Stückzahl ermöglicht. Zudem erreicht man eine hohe Ressourcen-Effizienz, da nicht zusammengeschmolzene oder zusammengesinterte Pulverpartikel wiedereingesetzt werden können. Nachteilig bei diesen Verfahren ist derzeit noch die sehr geringe Aufbaurate.

Zudem ist bei Additiven Verfahren zu berücksichtigen, dass im Vergleich zu konventionellen Konsolidierungsverfahren, wie Gießen oder Sintern, andere metallphysikalische Mechanismen wirksam sind. Während beim Sintern Oberflächen- und Korngrenzendiffusion die Verdichtung bestimmen, sind bei Verfahren, die örtliches Aufschmelzen und Erstarren mit hoher Abkühlgeschwindigkeit umfassen, wie SLM, SEBM und LMD, die Wirkmechanismen andere, deutlich komplexer und auch noch nicht vollständig verstanden. Zu erwähnen sind dabei Benetzungsverhalten, Marangoni-Konvektion, Recoil-Effekte durch Verdampfung, Segregation, epitaktisches Kornwachstum, Erstarrungszeit, Wärmefluss, Wärmeflussrichtung und innere Spannungen in Folge von Erstarrungsschwund. Werkstoffkonzepte, die bei konventionellen Verfahren erfolgreich sind, führen zumeist bei Additiven Verfahren nicht zu fehlerfreien Bauteilen.

Die Herstellung von reinem W über Selektives Laserschmelzen wird in einem Fachartikel von Dianzheng Wang et al. (Appl. Sci. 2007, 7, 430), die Herstellung von Mo über Selektives Laserschmelzen in einem Fachartikel von D. Faidel et al. (Additive Manufacturing 8 (2015) 88-94) beschrieben. In der WO2012055398 wird ein selektiver Laserschmelzprozess für Refraktärmetalle offenbart, wobei die Zusammensetzung des Werkstoffs durch Reaktion mit einem in der Atmosphäre enthaltenen reaktiven Gases während des Aufbaus des Bauteils verändert werden kann. In der Schrift CN103074532 wird das Laserschmelzen von mechanisch legiertem W-TiC Pulver beschrieben.

Gemäß der CN103074532 werden Wolfram-Pulver und TiC-Pulver in einer Hochenergie-Kugelmühle mechanisch legiert. Das so entstandene TiC/W composite Pulver-Material wird in Folge über ein SLM Verfahren verarbeitet.

Die US2017252787 A1 (Stawovy) beschreibt ein Verfahren zur Herstellung von Bauteilen über ein additives SLM- oder EBM Fertigungsverfahren aus Schmelzdraht.

Das am weitesten verbreitete Additive Fertigungsverfahren ist das Selektive Laserschmelzverfahren (SLM). Dabei wird mittels einer Rakel eine Pulverschicht auf einem Untergrund aufgebracht. Anschließend wird ein Laserstrahl über diese Pulverlage geführt. Dieser schmilzt die Pulverpartikel lokal auf, wodurch die einzelnen Pulverpartikel miteinander und mit der zuvor aufgebrachten Lage zusammenschmelzen. Eine Lage des zu fertigenden Bauteils entsteht somit durch sukzessives lokales Schmelzen und anschließendes Erstarren von Pulverpartikeln. Anschließend wird eine weitere Pulverlage auf die bereits bearbeitete Pulverlage aufgebracht und der Prozess beginnt erneut. Das Bauteil wird somit mit jeder neuen Pulverlage weiter aufgebaut, wobei die Aufbaurichtung normal zu den jeweiligen Ebenen der Pulverlagen angeordnet ist. Da sich durch den Additiven Fertigungsprozess eine charakteristische Mikrostruktur ausbildet, ist es dem Fachmann möglich, zu erkennen, ob ein Bauteil durch einen konventionellen oder einen Additiven Prozess hergestellt ist.

Mo und W weisen einen hohen Schmelzpunkt, in der festen Phase eine hohe thermische Wärmeleitfähigkeit und in der flüssigen Phase eine hohe Oberflächenspannung und Viskosität auf. Diese Werkstoffe zählen zu den am schwierigsten durch ein additives Fertigungsverfahren zu verarbeitbaren Werkstoffen. Die durch die hohe Wärmeleitfähigkeit bedingte kurze Zeit in der schmelzflüssigen Phase, verbunden mit der hohen Oberflächenspannung und der hohen Viskosität, begünstigen den Ballingeffekt, der wiederum zu Poren und damit zu rissauslösenden Defekten und einer niedrigen Dichte führt. Der Ballingeffekt wirkt sich auch negativ auf die Oberflächenqualität, im Speziellen auf die Oberflächenrauigkeit aus. Da diese Werkstoffe eine sehr geringe Bruchzähigkeit aufweisen, führen örtliche Defekte, verbunden mit den verfahrensimmanenten inneren, thermisch induzierten Spannungen zu Rissen.

Über selektives Laser- oder Elektronenstrahlschmelzen hergestellte Bauteile aus Mo und W zeigen ein stängelkristallines Gefüge, wobei das mittlere Kornstreckungsverhältnis (Grain Aspect Ratio - GAR-Wert; Verhältnis Kornlänge zu Kornbreite) in Aufbaurichtung typischerweise größer als 8 ist. In der Ebene normal zur Aufbaurichtung bildet sich ein interkristallines Rissnetzwerk aus, das die Schmelzspur des Laser- bzw. Elektronenstrahls abbildet. Die Risse sind überwiegend interkristalline Heiß- und Kaltrisse. Bei einer Beanspruchung, welche zum Bruch des Bauteils führt, weisen derartig hergestellte Bauteile ein überwiegend interkristallines Bruchverhalten auf. Unter einem interkristallinen Bruchverhalten versteht man einen Bruch, der überwiegend durch Risse entlang der Korngrenzen verursacht wird. Durch dieses Bruchverhalten zeigen derart hergestellte Bauteile eine geringe Bruchfestigkeit und eine geringe Bruchzähigkeit.

Dementsprechend besteht die Aufgabe der vorliegenden Erfindung darin, ein Bauteil aus Mo, einer Mo-basierten Legierung, W oder einer W-basierten Legierung bereitzustellen, das über ein Additives Fertigungsverfahren, wie beispielsweise über Selektives Laserschmelzen (SLM), Selektives Elektronenstrahlschmelzen (SEBM) oder Laser Metal Deposition (LMD), hergestellt ist und die zuvor erwähnten Nachteile nicht aufweist. Insbesondere ist es Aufgabe der Erfindung ein Bauteil bereitzustellen, das folgende Eigenschaften aufweist:
- Verringerte Fehler-, insbesondere Risshäufigkeit
- Verbesserte Bruchzähigkeit
- Verbesserte Oberflächenqualität
- Verbesserte Dichte

Zudem ist es Aufgabe der Erfindung, ein Verfahren zur prozesssicheren Herstellung eines Bauteils mit den zuvor erwähnten Eigenschaften bereitzustellen. Des Weiteren ist es Aufgabe der Erfindung ein Pulver bereitzustellen, das für die Verwendung in der Additiven Fertigung ein optimiertes Verhalten zeigt.

Die Aufgabe wird durch ein über ein Additives Fertigungsverfahren hergestelltes Bauteil aus Mo, W einer Mo- oder W-basierten Legierung gemäß Anspruch 1, durch ein Verfahren zur Herstellung eines Bauteils gemäß Anspruch 11 und die Verwendung eines Pulvers für die Additive Fertigung gemäß Anspruch 16 gelöst. Vorteilhafte Ausführungsformen der Erfindung sind in den abhängigen Ansprüchen angegeben.

Gemäß der vorliegenden Erfindung weist das Bauteil, das eine Vielzahl einzelner, über ein Additives Fertigungsverfahren durch einen energiereichen Strahl zu einer festen Struktur zusammengeschmolzener Pulverpartikel aus Mo, W, einer Mo- oder einer W-basierten Legierung umfasst, einen Sauerstoffgehalt kleiner oder gleich 0,1 At% und einen Kohlenstoffgehalt größer oder gleich 0,08 At% auf.

Unter Mo-basierter Legierung wird dabei eine Legierung verstanden, die zumindest 80 At% Mo enthält. Insbesondere weist eine Mo-basierte Legierung mindestens 90, 95 oder 99 At% Mo auf. Eine W-basierte Legierung enthält zumindest 80 At% W. Insbesondere weist eine W-basierte Legierung mindestens 90, 95 oder 99 At% W auf. Mo-W Legierungen sind in allen Konzentrationsbereichen eine bevorzugte Ausführungsform.

Die einzelnen Pulverpartikel werden über ein Additives Fertigungsverfahren geschmolzen, wobei vorteilhaft SLM (Selektives Laserstrahl Schmelzen) oder SEBM (Selektives Elektronenstrahl Schmelzen) zum Einsatz kommen.

Das Bauteil wird dabei lagenweise aufgebaut. Auf einer Grundplatte wird mittels einer Rakel eine Pulverlage aufgebracht. Die Pulverlage hat in der Regel eine Höhe von 10 bis 150 µm. Beim SEBM werden zunächst mit defokussiertem Elektronenstrahl die Pulverpartikel miteinander leitfähig versintert. Anschließend wird durch Energieeintrag (bevorzugt Laser- oder Elektronenstrahl) das Pulver lokal aufgeschmolzen. Der Strahl bildet ein zeilenförmiges Schmelzbad mit einer Zeilenbreite von typischerweise 30 µm bis 200 µm aus. Der Laser- oder Elektronenstrahl wird über die Pulverlage geführt. Durch geeignete Strahlführung kann die gesamte Pulverlage oder auch nur ein Teil der Pulverlage geschmolzen und in weiterer Folge verfestigt werden. Die geschmolzenen und verfestigten Bereiche der Pulverlage sind Teil des fertigen Bauteils. Das nicht geschmolzene Pulver ist nicht Bestandteil des hergestellten Bauteils. Anschließend wird eine weitere Pulverlage mittels Rakel aufgebracht und der Laser- oder Elektronenstrahl erneut über diese Pulverlage geführt. Somit entstehen ein lagenweiser Aufbau und eine charakteristische Bauteilstruktur. Durch die Führung des Elektronen- oder Laserstrahls bildet sich in jeder Pulverlage eine sogenannte Scanstruktur aus. Des Weiteren bildet sich in Aufbaurichtung, welche durch die Aufbringung einer neuen Pulverlage bestimmt wird, ebenfalls eine typische Lagenstruktur aus. Die Scanstruktur, als auch die einzelnen Lagen sind am fertigen Bauteil erkennbar.

Das Gefüge von über ein Additives Fertigungsverfahren durch einen energiereichen Strahl (bevorzugt durch einen Laser- oder Elektronenstrahl) selektiv zu einer festen Struktur zusammengeschmolzenen Pulverpartikeln unterscheidet sich deutlich von einem über andere Verfahren, beispielsweise Thermisches Spritzen, hergestellten Gefüge. So werden beim Thermischen Spritzen einzelne Spritzpartikel in einem Gasstrom beschleunigt und auf die Oberfläche des zu beschichtenden Bauteils geschleudert. Die Spritzpartikel können dabei in auf- oder angeschmolzener (Plasmaspritzen) bzw. fester (Kaltgasspritzen) Form vorliegen. Eine Schichtbildung findet statt, da die einzelnen Spritzpartikel beim Auftreffen auf die Bauteiloberfläche abflachen, vorrangig durch mechanische Verklammerung haften bleiben und lagenweise die Spritzschicht aufbauen. Es bildet sich dabei eine plattenförmige Schichtstruktur aus. Derartig hergestellte Schichten zeigen in einer Ebene parallel zur Aufbaurichtung eine Kornstreckung senkrecht zur Aufbaurichtung mit einem mittleren Kornstreckungsverhältnis (Grain Aspect Ratio - GAR-Wert; Verhältnis Kornlänge zu Kornbreite) deutlich über 2 und unterscheiden sich somit deutlich von über selektivem Laser- oder Elektronenstrahlschmelzen hergestellten Schichten/Bauteilen, die in einer Ebene parallel zur Aufbaurichtung ebenfalls ein mittleres Kornstreckungsverhältnis deutlich über 2 aufweisen, jedoch mit einer Kornstreckung parallel zur Aufbaurichtung.

Erfindungswesentlich ist nun, dass der Sauerstoffgehalt kleiner oder gleich 0,1 At% beträgt. Die Bestimmung des Sauerstoffgehalts ist unabhängig davon, ob dieser in gebundener oder elementarer Form vorliegt. Bevorzugt beträgt der Sauerstoffgehalt für Mo < 0,09 At%, < 0,08 At%, < 0,07 At%, < 0,06 At%, < 0,05 At%, < 0,04 At%, < 0,03 At%, < 0,02 At% oder < 0,01 At%. Für W beträgt der Sauerstoffgehalt bevorzugt < 0,09 At%, < 0,08 At%, < 0,07 At%, < 0,06 At%, < 0,05 At%, < 0,04 At%, < 0,03 At%, < 0,02 At% oder < 0,01 At%. Die Analyse des Sauerstoffgehalts erfolgt durch Trägergasheißextraktion. Bei der Trägergasheißextraktion werden die Elemente Sauerstoff, Stickstoff und Wasserstoff bei Temperaturen von 1500-2400 °C in einem Edelgasstrom in Gegenwart von Kohlenstoff als Gase freigesetzt und mittels Infrarot- bzw. Wärmeleitfähigkeitsmesszelle detektiert. Der Methodenbereich liegt für die Bestimmung von Sauerstoff bei größer gleich 5 µg/g.

Durch die erfindungsgemäße Sauerstoffgehalte werden folgende positive Eigenschaften erzielt, wie dies im Folgenden noch im Detail ausgeführt wird.
- Verringerung der Fehler- insbesondere der Risshäufigkeit
- Verringerung des Balling-Effekts
- Keine bzw. reduzierte Heißrissbildung
- Keine bzw. reduzierte Bildung von interkristallinen Kaltrissen
- Verzahnte Korngrenzen
- Reduzierung des GAR-Wertes
- Erhöhung der Bruchzähigkeit
- Verbesserte Oberflächenqualität

Liegt der Sauerstoffgehalt über dem erfinderischen Gehalt so werden diese Eigenschaften in nicht ausreichendem Maß erzielt. Typischerweise weisen über Additive Fertigungsverfahren hergestellte Bauteile aus Mo, W, Mo- und W-basierten Legierungen einen Sauerstoffgehalt zwischen 0,25 und 0,6 At% auf. Bei Verwendung von mechanisch legiertem Pulvern können auch deutlich höhere Sauerstoffgehalte von 2 At% und darüber auftreten. Der Sauerstoffgehalt wird durch das Additive Fertigungsverfahren, wie beispielsweise das Selektive Laser- oder Elektronenstrahlschmelzen, nicht verringert. Bei Anwendung hochauflösender Untersuchungsverfahren wie beispielsweise Raster- oder Transmissionselektronenmikroskopie zeigt sich, dass bei Bauteilen gemäß dem Stand der Technik der Sauerstoff überwiegend an den Korngrenzen in Form von Mo- bzw. W-Oxid ausgeschieden ist. Diese Ausscheidungen sind verantwortlich für das interkristalline Bruchverhalten mit folglich geringer Bruchfestigkeit und -zähigkeit von additiv gefertigten Bauteilen aus Mo, W und deren Legierungen. Durch den hohen Sauerstoffgehalt können sowohl Heiß- als auch Kaltrisse entstehen. Heißrisse entstehen während der Herstellung durch eine verringerte Korngrenzenfestigkeit. Im gegebenen Fall wird in der wärmebeeinflussten Zone der Schmelzspur die Korngrenzenfestigkeit durch das Aufschmelzen der an der Korngrenzen ausgeschiedenen Oxide ungünstig beeinflusst. Kaltrisse sind auf thermisch induzierte Spannungen in Verbindung mit Fehlern (Poren, Mikrorisse), welche als Risskeime fungieren, zurückzuführen. Ist nun die Korngrenzenfestigkeit deutlich geringer als die Festigkeit im Korninneren, wie dies beim Stand der Technik der Fall ist, tritt ein interkristalliner Rissverlauf auf.

Zudem verstärkt ein hoher Sauerstoffgehalt auch den Balling-Effekt. Der Sauerstoff wird im Randbereich der Schmelzzone angereichert und verringert dort die Oberflächenspannung. Damit wird durch Marangoni-Konvektion ein Materialfluss aus dem Randbereich in das Zentrum der Aufschmelzzone begünstigt, wodurch das durch die Plateau-Rayleigh-Instabilität ausgelöste Balling noch deutlich verstärkt wird.

Erfindungsgemäß weist das Bauteil einen Kohlenstoffgehalt größer oder gleich 0,08 At% auf. Die Messung des Kohlenstoff-Gehalts erfolgt über Verbrennungsanalyse. Bei der Verbrennungsanalyse werden die Elemente Kohlenstoff und Schwefel bei Temperaturen < 1600° C in einem Aluminiumoxidtiegel im Sauerstoffstrom verbrannt und in Form ihrer Oxide mittels Infrarotzelle bestimmt. Der Methodenbereich für die Kohlenstoffbestimmung liegt in der Regel bei größer gleich 5 µg/g Kohlenstoff. Die Bestimmung des Kohlenstoffgehalts ist unabhängig davon, ob dieser in gebundener oder elementarer Form vorliegt. Gemäß dem Stand der Technik liegt der Kohlenstoffgehalt bei additiv gefertigten Mo- und W-Bauteilen typischerweise bei kleiner 0,01 At%.

Wie in der Verfahrensbeschreibung und den Ausführungsbeispielen angeführt, wird der erfinderische Sauerstoffgehalt bevorzugt durch Kohlenstoffzugabe zum Ausgangspulver eingestellt. Grundsätzlich können die erfindungsgemäßen Eigenschaften auch erzielt werden, wenn der Kohlenstoffgehalt im Bauteil kleiner 0,08 At% beträgt. Allerdings hat es sich gezeigt, dass bei geringfügigen Materialinhomogenitäten, wie diese bei einem industriellen Prozess nicht vollständig vermieden werden können, ein Kohlenstoffgehalt von größer gleich 0,08 At% äußerst vorteilhaft ist. Damit ist es möglich, den erfindungsgemäßen Sauerstoffgehalt mit hoher Prozesssicherheit einzustellen. Zudem werden örtliche Sauerstoffsegregationen zuverlässig vermieden oder der Sauerstoff wird durch die Bildung von Oxikarbiden in einer Form gebunden, dass sich dieser nicht mehr ungünstig auf die Korngrenzenfestigkeit auswirken kann. Während sich bei konventionell gefertigten (gesinterten) Bauteilen ein hoher Kohlenstoffgehalt sehr negativ auf die Eigenschaften auswirkt, da sich an den Korngrenzen grobe Karbidausscheidungen bilden, können additiv gefertigte Mo- und W-Bauteile auf Grund der hohen Abkühlgeschwindigkeit in vorteilhafter Weise einen Kohlenstoffgehalt bis 25 At% aufweisen. Während bei gesintertem Material schon vergleichsweise geringe Werte zu einer unzulässigen Versprödung führen, weisen additiv hergestellte Bauteile auf Grund der feinkörnigen und verzahnten Kornstruktur auch bei einem C-Gehalt, die der eutektischen Konzentration entspricht (17At% bei Mo, 22 At% bei W) eine für viele Anwendungen noch ausreichende Duktilität auf. Bauteile mit einem hohen Kohlenstoffgehalt bis 25 At% können beispielsweise für Verschleißanwendungen eingesetzt werden, wo insbesondere eine hohe Warm- und Kriechfestigkeit gefordert sind. Ein Kohlenstoffgehalt größer 1,1 At% bei Mo bzw. größer ca. 0,8 At% bei W wirkt sich günstig auf die Schmelz-Breitung aus, da die Liquidus-Temperatur bei Mo von 2620°C auf 2200°C und bei W von 3420°C auf ca. 2700°C gesenkt wird. Damit kann der Balling-Effekt verringert und die Bauteileigenschaften entsprechend verbessert werden.

Je nach Anwendung und daraus resultierenden Anforderungen liegen vorteilhafte Untergrenzen für den Kohlenstoffgehalt bei 0,1 At%, 0,2 At%, 0,3 At%, 0,4 At%, 0,5 At%, 0,6 At%, 0,7 At%, 0,8 At%, 0,9 At% und 1 At%. Vorteilhafte Obergrenzen liegen bei 2 At%, 5 At%, 10 At% und 15 At%. Für Anwendungen, wo eine möglichst hohe Duktilität gefordert ist, liegt die Obergrenze bei 2 At%.

Gemäß einer weiteren vorteilhaften Ausführungsform der Erfindung ist es vorgesehen, dass der C-Gehalt (in At%) zumindest gleich groß wie der O-Gehalt (in At%) ist. Bevorzugt ist der C-Gehalt (in At%) mindestens 1,5-mal, 2-mal oder 5-mal so hoch wie der O-Gehalt (in At%). Ist eine hohe Duktilität des Bauteils gefordert, ist es vorteilhaft, wenn das C- zu O-Verhältnis einen Wert von 30, insbesondere von 20 oder 10 nicht übersteigt. Das erfindungsgemäße C- zu O-Verhältnis gewährleistet eine prozesssichere Fertigung. Das optimale C- zu O-Verhältnis ist von den jeweiligen, aus der Anwendung resultierenden Anforderungen abhängig und kann durch entsprechende Versuche in einfacher Weise eingestellt werden.

Gemäß einer weiteren vorteilhaften Ausführungsform der Erfindung ist es vorgesehen, dass das Bauteil Karbide aufweist, die in einer Matrix aus Rein-Mo (bei Mo-basierten Werkstoffen) bzw. Rein-W (bei W-basierten Werkstoffen) eingebettet sind. Die Karbide (zum Beispiel Mo₂C oder MoC oder W₂C oder WC) können sich dabei schon bei der Herstellung bilden, wie dies beim Ausführungsbeispiel der Fall ist, oder durch eine nachgelagerte Glühbehandlung erzeugt werden. Die duktile Matrix aus Rein-Mo bzw. Rein-W gewährleistet, dass Spannungen durch plastische Verformung abgebaut werden können und so nicht zu Rissen führen. Unter Rein-Mo bzw. Rein-W wird dabei verstanden, dass der Anteil an gelösten Elementen kleiner oder gleich 0,5 At%, bevorzugt kleiner oder gleich 0,1 At% oder 0,01 At% beträgt.

Gemäß einer weiteren vorteilhaften Ausführungsform ist es vorgesehen, dass mehr als 25 At%, bevorzugt mehr als 50 At% und insbesondere bevorzugt mehr als 80 oder 90 At% des Kohlenstoffs als Mo- (zum Beispiel Mo₂C oder MoC) und/oder als Wolframkarbid (zum Beispiel W₂C oder WC) vorliegen. Die Karbide liegen in feiner ausgeschiedener Form vor und erhöhen bei geringen C-Gehalten die Korngrenzenfestigkeit, bei hohen C-Gehalten die Warm- und Kriechfestigkeit.

Gemäß einer weiteren vorteilhaften Ausführungsform der Erfindung ist es vorgesehen, dass das Bauteil in einer Bruchebene parallel zur Aufbaurichtung an mindestens 50 % der Bruchfläche ein transkristallines Bruchverhalten aufweist. Bevorzugt ist der transkristalline Bruchanteil ≥ 80 %, insbesondere bevorzugt ≥ 90 %. Unter transkristallinem Bruchverhalten versteht man, dass bei einem durch Überbelastung ausgelösten Bruch des Bauteils der Riss nicht entlang der Korngrenzen, sondern überwiegend durch die Körner hindurch verläuft. Der Übergang vom inter- zum transkristallinem Bruchverhalten ist auf den erfindungsgemäßen niedrigen Sauerstoffgehalt zurückzuführen. Die Messung des transkristallinen Bruchanteils erfolgt über einen Kerbschlagbiegeversuch nach Norm (DIN EN ISO 148-1) bei Raumtemperatur. Die Auswertung des transkristallinen Bruchanteils erfolgt über Mikroskopie-Aufnahmen der durch den Kerbschlagbiegeversuch erzeugten Bruchfläche im Rasterelektronenmikroskop. Hierbei wird an einer repräsentativen Stelle der Bruchfläche die Fläche mit transkristallinem und die Fläche mit interkristallinem Bruchverhalten vermessen und aus dem Verhältnis der transkristallinen Fläche zur untersuchten Gesamtfläche der transkristalline Bruchanteil bestimmt.

Gemäß einer weiteren vorteilhaften Ausführungsform der Erfindung ist es vorgesehen, dass das Bauteil in einer Bruchebene senkrecht zur Aufbaurichtung an mindestens 50 % der Bruchfläche ein transkristallines Bruchverhalten aufweist. Bevorzugt ist der transkristalline Bruchanteil ≥ 80 %, insbesondere bevorzugt ≥ 90 %.

Gemäß einer weiteren vorteilhaften Ausführungsform der Erfindung ist es vorgesehen, dass das Bauteil, unabhängig von der Orientierung der Bruchebene, an mindestens 50 % der Bruchfläche ein transkristallines Bruchverhalten aufweist. Bevorzugt ist der transkristalline Bruchanteil ≥ 80 %, insbesondere bevorzugt ≥ 90 %. Die Messung und Bestimmung des transkristallinen Bruchverhaltens wird wie oben beschrieben durchgeführt. Auf Grund dieser Eigenschaft weist das Bauteil unabhängig von der Orientierung eine hohe Korngrenzenfestigkeit und damit eine hohe Bruchzähigkeit auf.

Gemäß einer weiteren vorteilhaften Ausführungsform der Erfindung ist es vorgesehen, dass das Bauteil frei von intermetallischen Phasen ist. Eine intermetallische Phase besteht aus zwei oder mehreren Metallen, wobei sich die Gitterstruktur dieser Phase von der Gitterstruktur des Grundmaterials unterscheidet. Die Vermeidung von intermetallischen Phasen wirkt sich günstig auf die Duktilität des Bauteils aus.

Gemäß einer weiteren vorteilhaften Ausführungsform der Erfindung ist es vorgesehen, dass die Summe metallischer Legierungselemente kleiner oder gleich 2 At%, bevorzugt kleiner oder gleich 1 At% ist, wobei dabei Mo als Legierungselement in W bzw. W als Legierungselement in Mo in diesem Wert nicht enthalten sind. Durch diesen geringen Anteil wird die verfestigende und damit versprödende Wirkung weiterer Legierungselemente begrenzt.

Gemäß einer weiteren vorteilhaften Ausführungsform der Erfindung ist es vorgesehen, dass das Bauteil in einer Ebene parallel zur Aufbaurichtung einen mittleren GAR-Wert in einer Richtung parallel zur Aufbaurichtung von kleiner 5 aufweist. Das Bauteil weist bevorzugt in einer Richtung senkrecht zur Aufbaurichtung keine Kornstreckung auf. Durch ein hohes Kornstreckungsverhältnis parallel zur Aufbaurichtung wird bei Belastungen senkrecht zur Aufbaurichtung ein interkristalliner Bruchverlauf entlang der sich im Wesentlichen entlang der Aufbaurichtung erstreckenden Korngrenzen begünstigt, da der Bruch-Weg kurz und damit die erzeugte Bruchfläche (auf Grund des gerichteten Verlaufs der Korngrenzen) klein ist. Ein kleiner GAR-Wert gewährleistet hingegen, dass auch bei solchen Belastungen senkrecht zur Aufbaurichtung eine ausreichende Bruchzähigkeit gegeben ist. Besonders bevorzugt ist der GAR-Wert kleiner 3.

Die vorliegende Erfindung betrifft ferner ein Additives Fertigungsverfahren zur Herstellung eines Bauteils aufweisend nachfolgende Schritte:
- Bereitstellen eines Ausgangspulvers, das Partikel aus Mo, einer Mo-basierten Legierung, W oder einer W-basierten Legierung aufweist, wobei die einzelnen Pulverpartikel über die Schmelzphase hergestellt sind und das Pulver einen Kohlenstoffgehalt im Bereich von größer oder gleich 0,15 At% und kleiner oder gleich 25 At% aufweist;
- Lagenweises Zusammenschmelzen der Pulverpartikel des Ausgangspulvers mit einem energiereichen Strahl.

Mit dem erfindungsgemäßen Additiven Fertigungsverfahren werden die zuvor in Bezug auf das erfindungsgemäße Bauteil erläuterten Vorteile zuverlässig und prozesssicher erreicht. Ferner sind die zuvor erwähnten vorteilhaften Ausführungsformen der Erfindung auch für das erfindungsgemäße Verfahren vorteilhaft.

Der durch das erfindungsgemäße Verfahren hergestellte Bauteil weist daher zumindest eine der folgenden Eigenschaften auf:
- erfindungsgemäß:
   Sauerstoffgehalt ≤ 0,1 At%, insbesondere bevorzugt für Mo < 0,09 At%, < 0,08 At%, < 0,07 At%, < 0,06 At%, < 0,05 At%, < 0,04 At%, < 0,03 At%, < 0,02 At% oder < 0,01 At% und für W < 0,09 At%, < 0,08 At%, < 0,07 At%, < 0,06 At%, < 0,05 At%, < 0,04 At%, < 0,03 At%, < 0,02 At% oder < 0,01 At%
- erfindungsgemäß:
   Kohlenstoffgehalt ≥ 0,08 At%, insbesondere bevorzugt ≥ 0,1 At%, ≥ 0,2 At%, ≥ 0,3 At%, ≥ 0,4 At%, ≥ 0,5 At%, ≥ 0,6 At%, ≥ 0,7 At%, ≥ 0,8 At%, ≥ 0,9 At% oder ≥ 1 At%
- vorteilhaft:
   Kohlenstoffgehalt ≤ 25 At%, insbesondere bevorzugt ≤ 15 At%, ≤ 10 At%, ≤ 5 At% oder ≤ 2 At%
- vorteilhaft:
   Kohlenstoffgehalt (in At%) ≥ Sauerstoffgehalt (in At%), insbesondere bevorzugt C (in At%) / O (in At%) ≥ 1,5, ≥ 2 oder ≥ 5 sowie C (in At%) / O (in At%) ≤ 30, ≤ 20 oder ≤ 10
- vorteilhaft:
   Bauteil weist Karbide auf, die in einer Matrix aus Rein-Mo bzw. Rein-W eingebettet sind. Unter Rein-Mo bzw. Rein-W wird dabei verstanden, dass der Anteil an gelösten Elementen kleiner oder gleich 0,5 At%, bevorzugt kleiner oder gleich 0,1 At% oder 0,01 At% beträgt.
- vorteilhaft:
   Mehr als 25 At%, insbesondere bevorzugt mehr als 50 At% oder mehr als 80 At%, bezogen auf den Gesamtanteil an enthaltenen Kohlenstoff, liegen als Mo- oder W-Karbid vor.
- vorteilhaft:
   Bauteil weist in einer Bruchebene parallel zur Aufbaurichtung an mindestens 50 % der Bruchfläche ein transkristallines Bruchverhalten auf, insbesondere bevorzugt ist der transkristalline Bruchanteil 2 80 % oder ≥ 90 %.
- vorteilhaft:
   Bauteil weist in einer Bruchebene senkrecht zur Aufbaurichtung an mindestens 50 % der Bruchfläche ein transkristallines Bruchverhalten auf, insbesondere bevorzugt ist der transkristalline Bruchanteil ≥ 80 % oder ≥ 90 %.
- vorteilhaft:
   Bauteil weist unabhängig von der Orientierung der Bruchebene an mindestens 50 % der Bruchfläche ein transkristallines Bruchverhalten auf, insbesondere bevorzugt ist der transkristalline Bruchanteil ≥ 80 % oder≥ 90 %.
- vorteilhaft: Bauteil ist frei von intermetallischen Phasen.
- vorteilhaft:
   Summe metallischer Legierungselemente ist kleiner oder gleich 2,0 At% insbesondere bevorzugt kleiner oder gleich 1,0 At%, wobei dabei Mo als Legierungselement in W bzw. W als Legierungselement in Mo nicht enthalten sind.
- vorteilhaft:
   Mittlerer GAR-Wert in einer Ebene parallel zur Aufbaurichtung ist kleiner 5, insbesondere bevorzugt kleiner 3.

Erfindungswesentlich ist, dass das Pulver einen Kohlenstoffgehalt von größer oder gleich 0,15 At% aufweist und die Pulverpartikel über eine der folgenden Routen hergestellt sind:
i) Herstellung durch Granulation
ii) Herstellung über die Schmelzphase
iii) Herstellung durch Granulation und über die Schmelzphase

Damit ist gewährleistet, dass bei der Additiven Fertigung, die ein Zusammenschmelzen der Pulverpartikel mit einem energiereichen Strahl umfasst, die erfindungsgemäßen Vorteile erzielt werden. Besonders bevorzugte Kohlenstoffgehalte liegen für Mo und Mo-Basiswerkstoffe bei ≥ 0,2 At%, ≥ 0,4 At%, ≥ 0,6 At%, ≥ 0,8 At%, ≥ 1,0 At%, ≥ 1,25 At% und ≥ 1,5 At%. Besonders bevorzugte Kohlenstoffgehalte liegen für W und W-Basiswerkstoffe bei ≥ 0,2 At%, ≥ 0,4 At%, ≥ 0,6 At%, ≥ 0,8 At%, ≥ 1,0 At%, ≥ 1,25 At% und ≥ 1,5 At%. Liegt der Kohlenstoffgehalt unter 0,15 At%, so werden die erfindungsgemäßen Vorteile nicht erzielt, wie dies nachfolgend noch näher ausgeführt ist.

Die einzelnen Pulverpartikel werden gemäß der erfindungsgemäßen Herstellungsvariante über eine Schmelzphase hergestellt. Auf Grund des geringen Partikelvolumens führt dies auch ohne zusätzliche Maßnahmen zu einer hohen Abkühlgeschwindigkeit. Die hohe Abkühlgeschwindigkeit führt zu einer sehr gleichmäßigen Verteilung des Kohlenstoffs, beispielsweise indem der Kohlenstoff zwangsgelöst im Mo- bzw. W-Kristallgitter vorliegt oder in Form kleinster Karbidteilchen ausgeschieden ist. Gemäß einer weiteren - nicht erfindungsgemäßen - Variante werden die Pulverpartikel über Granulation hergestellt. Unter Granulation versteht man das Zusammenlagern und Aneinanderbinden feindisperser Primärpartikel zu größeren Pulverpartikeln. Dieser Prozess wird nachfolgend noch im Detail beschrieben. Im Vergleich mit einem gemahlenen Pulver weisen granulierte Pulverpartikel ein gutes Fließverhalten auf, was das Aufbringen einer gleichmäßigen Pulverlage ermöglicht. Zudem werden ein hoher Sauerstoffgehalt und sonstige Verunreinigungen im Pulver, die auf Abrieb aus den Mahlaggregat zurückzuführen sind, vermieden, was im Folgenden noch genauer ausgeführt wird. Der Kohlenstoff kann über die feindispersen Primärpartikel oder über einen Karburierprozess eingebracht werden. In vorteilhafter Weise erfolgt der Karburierprozess über eine Gasphase (zum Beispiel Methan).

Besonders vorteilhaft ist es, wenn die Pulverpartikel über Granulation und die Schmelzphase hergestellt sind. Dabei werden zunächst die feindispersen Primärpartikel granuliert und dann das Granulat über eine Schmelzphase sphäroidisiert. Auch hierzu werden die Vorteile nachfolgend noch ausgeführt.

Die bevorzugte Obergrenze für den Kohlenstoffgehalt liegt bei 25 At%, insbesondere bevorzugt bei 15 At%, 10 At% oder 5 At%. Wird eine optimale Bruchzähigkeit angestrebt, so liegt der vorteilhafte C-Gehalt bei kleiner oder gleich 2 At%. Der erfinderische Kohlenstoffgehalt in Verbindung mit der durch die Schmelzphase erzielten homogenen Verteilung wirkt sich positiv auf den additiven Fertigungsprozess und auf die Eigenschaften des mit diesem Pulver hergestellten Bauteils aus.

So werden folgende positive Effekte erzielt:
- Verringerung des O-Gehalts
- Reduzierung des Balling Effekts durch Vermeidung von Marangoni-Konvektion von der Schmelzbad-Außenseite in Richtung Schmelzbad-Zentrum; damit Reduzierung der Fehlerdichte
- Vollständige oder weitgehende Vermeidung von Heißrissen
- Vollständige oder weitgehende Vermeidung von Kaltrissen
- Hohe Korngrenzenfestigkeit
- Überwiegend transkristallines Bruchverhalten
- Geringe Korngröße
- Starke Verzahnung der Korngrenzen
- Hohe Bruchzähigkeit
- Prozesssichere Fertigung

Bei mechanisch legierten Pulvern werden diese Vorteile nicht oder nicht ausreichend erzielt. So erfolgt beim mechanischen Legieren von Pulvern in Hochenergiemühlen auf Grund der langen Mahlzeiten, dem kontinuierlichen Schaffen von neuer Oberfläche durch Zerbrechen und Verschweißen der Pulverpartikel und der beim Mahlen entstehenden Wärme ein hoher Sauerstoffeintrag in das Pulver. Dieser Sauerstoff kann entweder durch den Kohlenstoff nicht vollständig reduziert werden, was mit verstärkter Neigung zu Balling und Rissen einhergeht, oder führt zu mit CO gefüllten Poren.

Das lagenweise Zusammenschmelzen der Pulverpartikel des Ausgangspulvers mit einem energiereichen Strahl erfolgt vorzugsweise durch einen üblichen SLM, SEBM oder LMD Prozess. Diese Prozesse sind im vorgehenden Text bereits beschrieben.

Gemäß einer vorteilhaften Ausführungsform der Erfindung ist es vorgesehen, dass der Schritt des Bereitstellens des Ausgangspulvers ein Karburieren und ein Sphäroidisieren in der Schmelzphase umfasst, wobei der Schritt des Karburierens vor, während oder nach dem Schritt des Sphäroidisierens durchgeführt wird. Beim Sphäroidisieren werden Pulverteilchen eines Ausgangspulvers, welches beispielsweise Agglomerate aufweisen kann, zu dichten, homogenen Pulverpartikeln umgeschmolzen. Die Pulverpartikel weisen Kugelform und damit ausgezeichnete Fließeigenschaften auf. Unter Karburieren versteht man ein Aufkohlen, wobei das Aufkohlungsmittel in fester, flüssiger oder gasförmiger Form vorliegen kann. Bevorzugt erfolgt die Karburierung vor oder insbesondere bevorzugt während des Sphäroidisierens.

Gemäß einer weiteren vorteilhaften Ausführungsform der Erfindung ist es vorgesehen, dass das Sphäroidisieren in C-haltiger Atmosphäre in einem Plasma erfolgt. Bevorzugt kommt dabei ein induktiv gekoppeltes Hochfrequenzplasma zum Einsatz. Ein Gas wird dabei in den Plasmazustand versetzt, indem eine hochfrequente Wechselspannung induziert wird. Dadurch werden Wirbelströme erzeugt, die den Gasstrom auf Plasmatemperatur erwärmen. Auf Grund der Abwesenheit von Elektroden in der Entladungszone wird ein sehr reines Plasma generiert. Das Plasmagas ist bevorzugt Argon, dem als Aufkohlungsmittel CH₄ zugesetzt wird.

Gemäß einer weiteren vorteilhaften Ausführungsform der Erfindung ist es vorgesehen, dass das Bereitstellens des Ausgangspulvers ein Granulieren umfasst, wobei vor oder während des Granulierens dem Granulat eine kohlenstoffhaltige Substanz zugesetzt wird. Bevorzugt ist die kohlenstoffhaltige Substanz Flammruß oder ein organischer Binder. Unter Granulieren versteht man dabei ein Verfahren, bei dem ein Rohpulver (Primärpartikel) zu einem Granulat (Sekundärpartikeln) agglomeriert wird.

In vorteilhafter Weise ist es vorgesehen, dass das Granulieren dabei zumindest folgende Fertigungsschritte aufweist:
- Bereitstellen eines Schlickers, welcher Mo- und/oder W-Rohpulver, einen Binder und eine Flüssigkeit umfasst;
- Herstellen eines Granulats durch Sprühtrocknen des Schlickers zu einem Granulat;
- Optional teilweises oder vollständiges Entbindern des Granulats.

Als Binder können beispielsweise Polyvinylalkohol oder Paraffin eingesetzt werden. Der Binder kann auch zugleich als kohlenstoffhaltige Substanz (Aufkohlungsmittel) dienen. Als Flüssigkeit wird vorzugsweise eine leicht verdampfbare Flüssigkeit wie beispielsweise Aceton, Alkohol oder Wasser verwendet. Die Granulatherstellung erfolgt bevorzugt durch Sprühtrocknen. Dabei wird der Schlicker mit hohem Druck durch eine Düse in das Innere eines Sprühturmes unter Tropfenbildung gesprüht. Das gesprühte Gut wird auf seinem Flugweg von einem in den Sprühturm eingeleiteten heißen Gasstrom (zum Beispiel Stickstoff) getrocknet und im unteren Teil des Turmes als Granulat gesammelt. Das Granulat wird vor dem Sphäroidisieren in der flüssigen Phase bevorzugt entbindert. Unter Entbindern versteht der Fachmann das teilweise oder vollständige Entfernen des Binders. Das Entbindern kann chemisch (zum Beispiel durch Aceton) oder thermisch (durch eine Glühung) erfolgen.

Der erfindungsgemäße Kohlenstoffgehalt des Ausgangspulvers wird durch das Zumischen einer Kohlenstoff-haltigen Substanz (zum Beispiel Flammruß) zum Rohpulver und/oder durch das Entbindern eingestellt, indem der Binder nicht vollständig entfernt wird.

Gemäß einer weiteren vorteilhaften Ausführungsform der Erfindung ist es vorgesehen, dass beim Schritt des lagenweisen Zusammenschmelzens dem herzustellenden Bauteil zusätzlich thermische Energie zugeführt wird. Dies kann beispielsweise dadurch erfolgen, dass die Grundplatte, auf der das herzustellende Bauteil lagenweise aufgebaut wird, beheizt wird. Die Temperatur der Grundplatte ist hierbei bevorzugt > 400°C. Besonders bevorzugt weist die Grundplatte eine Temperatur > 700°C oder > 900°C auf. Vorzugsweise ist die Temperatur kleiner oder gleich 1.300°C. Durch die erhöhte Bauteiltemperatur wird das Schmelzbad deutlich langsamer abgekühlt, wodurch die Bildung von Kaltrissen vermieden wird. Durch die längere Abkühldauer und folglich längeren Schmelzphase wird die Breitung der Schmelze verbessert und damit die Dichte des Bauteils erhöht. Zudem wird die Bildung von Poren (zum Beispiel mit CO gefüllt) vermieden oder deren Anzahl oder Größe verringert.

Die Aufgabenstellung der Erfindung wird auch erfüllt, indem Pulver, das Partikel aus Mo, einer Mo-basierten Legierung, W oder einer W-basierten Legierung aufweist, wobei die Partikel granuliert und/oder über die Schmelzphase hergestellt sind und einen durchschnittlichen Kohlenstoffgehalt im Bereich von größer oder gleich 0,15 At% aufweisen, für ein Additives Fertigungsverfahren verwendet wird.

Gemäß einer vorteilhaften Ausführungsform ist das Additive Fertigungsverfahren Selektives Laserschmelzen, Selektives Elektronenstrahlschmelzen oder Laser Metal Deposition.

Weitere Vorteile der Erfindung ergeben sich anhand der nachfolgenden Beschreibung von Ausführungsbeispielen unter Bezugnahme auf die beigefügten Figuren.

Von den Figuren zeigen:
- Fig. 1:: Schematische Darstellung des Selektiven Laserschmelzprozesses (SLM);
- Fig. 2a:: Lichtmikroskopische Aufnahme eines über SLM hergestellten Mo-Bauteils gemäß Stand der Technik mit Schliffebene senkrecht zur Aufbaurichtung;
- Fig. 2b:: Lichtmikroskopische Aufnahme eines über SLM hergestellten Mo-Bauteils gemäß Stand der Technik mit Schliffebene in Aufbaurichtung (die Aufbaurichtung ist mittels Pfeil gekennzeichnet);
- Fig. 3:: Rasterelektronenmikroskopische Aufnahme der Bruchfläche parallel zur Aufbaurichtung eines über SLM hergestellten Mo-Bauteils gemäß Stand der Technik;
- Fig. 4a:: Lichtmikroskopische Aufnahme der erfindungsgemäßen über SLM hergestellten Mo-C Probe No.3 mit Schliffebene senkrecht zur Aufbaurichtung;
- Fig. 4b:: Lichtmikroskopische Aufnahme der erfindungsgemäßen über SLM hergestellten Mo-C Probe No.3 mit Schliffebene in Aufbaurichtung (die Aufbaurichtung ist mittels Pfeil gekennzeichnet);
- Fig. 5a:: Transelektronenmikroskopische Aufnahme (STEM HAADF) der erfindungsgemäßen über SLM hergestellten Mo-C Probe No.3;
- Fig. 5b:: Transelektronenmikroskopische Aufnahme (STEM HAADF) der erfindungsgemäßen über SLM hergestellten Mo-C Probe No.3 (gb markiert eine Korngrenze);
- Fig. 5c:: EELS Spektrum der erfindungsgemäßen über SLM hergestellten Mo-C Probe No.3 in dem in Fig. 5a gekennzeichneten Messpunkt;
- Fig. 5d:: EELS Spektrum der erfindungsgemäßen über SLM hergestellten Mo-C Probe No.3 in dem in Fig. 5b gekennzeichneten Messpunkt;
- Fig. 6:: Rasterelektronenmikroskopische Aufnahme der Bruchfläche parallel zur Aufbaurichtung der erfindungsgemäßen über SLM hergestellten Mo-C Probe No.3.

### Beispiele:

### Proben gemäß Stand der Technik:

Für die nicht erfindungsgemäßen Versuche wurden sphäroidisierte Mo- und W-Pulver verwendet. Bei beiden Pulvern wurde eine Siebfraktion 15 bis 40 µm verwendet. Das Mo-Pulver wies einen O-Gehalt von 0,39 At% und einen C-Gehalt von 0,01 At% auf, das W-Pulver einen O-Gehalt von 0,34 At% und einen C-Gehalt von 0,009 At%. Beide Pulver wurden mittels einer 400 W SLM Anlage zu Proben mit der Dimension 10 mm x 10 mm x 10 mm sowie zu Kerbschlagbiegeproben gemäß DIN EN ISO 148-1 verarbeitet. Die Kerbschlagbiegeproben wurden dabei mit nach oben zeigender Kerbe auf der Grundplatte aufgebaut. Damit liegt eine durch den Kerbschlagbiegeversuch erzeugte Bruchfläche parallel zur Aufbaurichtung. Die Anlage weist eine Bauraumheizung auf. Für die Versuche wurde die Grundplatte auf 800°C erwärmt.

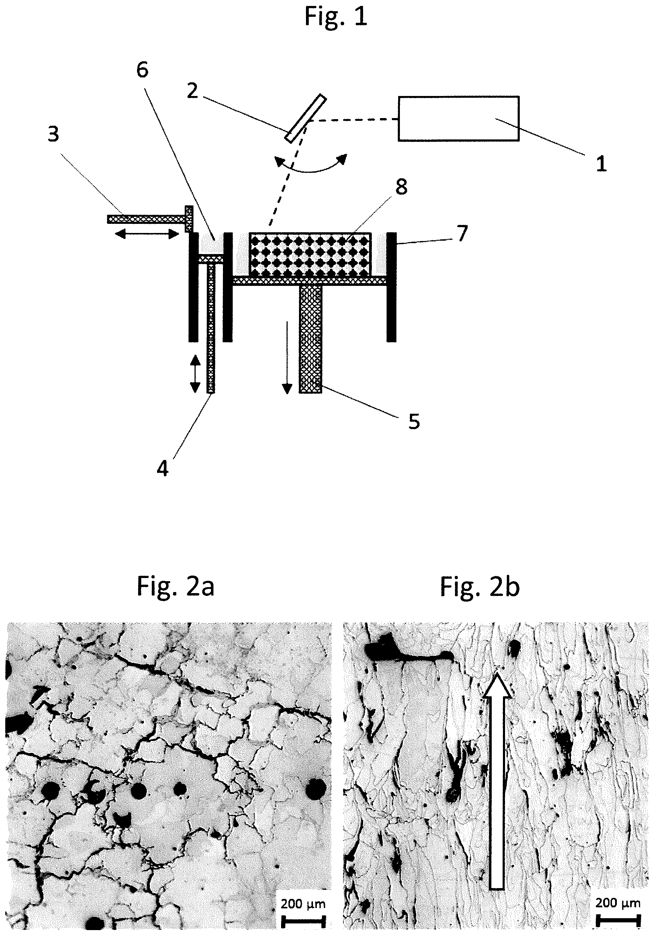

Der SLM-Prozess ist in Fig. 1 schematisch dargestellt. Ein Steuersystem steuert u.a. den Laser 1, den Laserspiegel 2, die Rakel 3, die Pulverzuführung 4 aus einem Pulvervorratsbehälter 6 und die Position der Grundplatte 5 im Bauraum 7. Mit Hilfe einer Rakel wurde eine Pulverlage aufgebracht. Der mit Hilfe eines Laserspiegels geführte Laserstrahl scannte über die Pulverlage und schmolz dabei die Partikel und teilweise die darunterliegende, bereits geschmolzene und erstarrte Schicht dort auf, wo sich gemäß Bauteildesign Material befindet (Bauteil 8). Anschließend wurde die Grundplatte um 30 µm abgesenkt und die Rakel brachte eine weitere Pulverlage auf und der Prozessablauf begann von neuem.

Folgende Prozessparameter kamen dabei zur Anwendung (siehe Tabelle 1):

**Tabelle 1**

| | Mo | W |
|---|---|---|
| Laserleistung in W | 400 | 400 |
| Scangeschwindigkeit in mm/s | 600 | 500 |
| Hatching-Abstand in µm | 100 | 100 |
| Scanstrategie | Mäander / Lagen um 67° versetzt | Mäander / Lagen um 67° versetzt |

Die nicht erfindungsgemäßen Proben (Fig.1, Markierung 8) wurden durch Drahterosion von der Grundplatte abgetrennt und die Bauteil-Dichte durch die Auftriebsmethode (hydrostatische Wägung) bestimmt, wobei offene Poren zuvor durch Tauchen in geschmolzenes Paraffin verschlossen wurden. Bei Mo wurde eine Dichte von 95 % und bei W eine Dichte von 94 % der theoretischen Dichte bestimmt. Von den Proben wurden mittels chemischer Analyse der O- und C-Gehalt bestimmt, Schliffe angefertigt, die Kerbschlagproben gemäß DIN EN ISO 148-1 geprüft und die Bruchfläche rasterelektronenmikroskopisch untersucht.

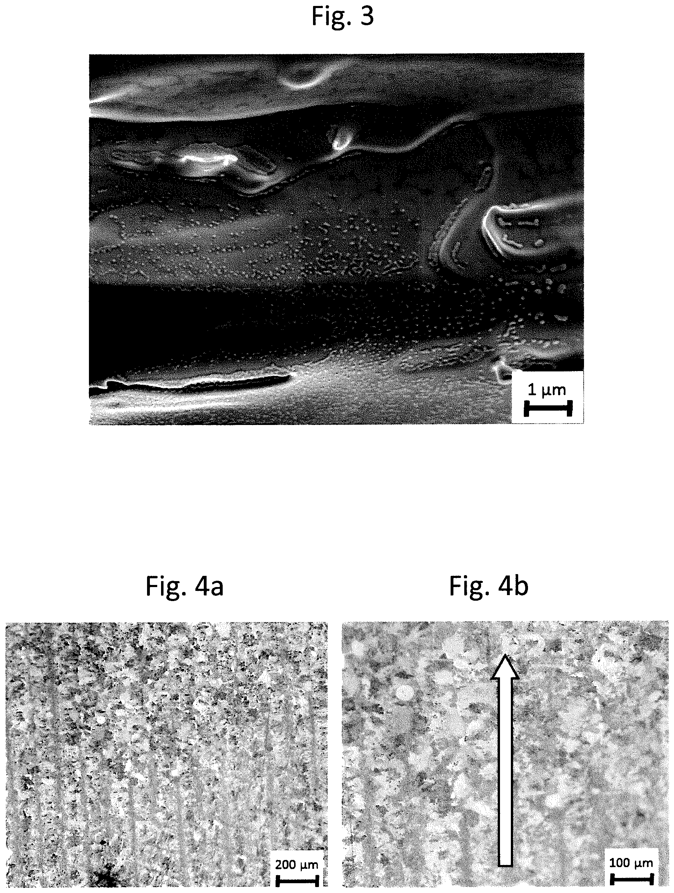

Das nicht erfindungsgemäße Mo-Bauteil wies dabei einen O-Gehalt von 0,39 At% und einen C-Gehalt von 0,009 At% auf, der W-Bauteil einen O-Gehalt von 0,32 At% und einen C-Gehalt von 0,015 At%. Beispielhaft ist die Mikrostruktur von Rein-Mo in Fig. 2a und 2b wiedergegeben. In Fig. 2a liegt dabei die Schliffebene senkrecht zur Aufbaurichtung. Die Schliffebene ist damit parallel zur Grundplatte. Der Bauteil weist viele Poren und kachelartig angeordnete interkristalline Risse auf, welche die Scanstruktur des Prozesses, sprich die Laserstrahlführung abbilden. Fig. 2b zeigt das Gefüge in einer Ebene parallel zur Aufbaurichtung. Die Kornstruktur ist stängelkristallartig mit einem mittleren Kornstreckungsverhältnis (GAR-Wert) von ca. 8 in Aufbaurichtung. Der GAR-Wert wurde durch Bildanalyse bestimmt, indem die mittlere Kornlänge und die mittlere Kornbreite bestimmt wurden und in weiterer Folge die mittlere Kornlänge durch die mittlere Kornbreite dividiert wurde. Auch in diesem Bild sieht man Poren und interkristalline Risse. Die durch den Kerbschlagbiegeversuch erzeugte Bruchfläche ist beispielhaft für Mo in Fig. 3 wiedergegeben. Die erzeugte Bruchfläche ist parallel zur Aufbaurichtung. Der Anteil an interkristallinem Bruch beträgt 100 %. Auf der Kornoberfläche sind Mo-Oxid-Ausscheidungen zu erkennen. Gemäß dem Stand der Technik hergestellte Bauteile zeigen auf Grund der vielen Risse und Poren und dem interkristallinen Bruchverhalten eine ungenügende Bruchfestigkeit und Bruchzähigkeit.

### Erfindungsgemäße Proben:

Für die Herstellung von Mo-C bzw. W-C Pulver wurden die Herstellmethoden A, B und C angewandt.

### A. Reaktives Sphäroidisieren in der Schmelzphase

Das Sphäroidisieren in der Schmelzphase erfolgte dabei in C-haltiger Atmosphäre in einem Plasma. Die Partikel des Agglomerat-förmigen Ausgangsmaterials wurden mithilfe eines Ar-CH₄ Trägergasgemisches in eine induktiv gekoppelte Plasmafackel gefördert und dadurch vollständig aufgeschmolzen. CH₄ wurde damit Teil des Plasmagases. Auf einer darauffolgenden Fallstrecke zur Abkühlung formten sich die schmelzflüssigen Partikel aufgrund der Oberflächenspannung sphärisch ein, erstarrten und wurden am Ende der Fallstrecke in einem Auffangbehälter gesammelt. Durch diesen Prozess wurden die Partikel gleichmäßig karburiert, wobei der Kohlenstoffgehalt des Pulvers durch das CH₄ zu Ar Verhältnis in einfacher Art und Weise eingestellt werden kann. Danach wurden die Pulver abgesiebt und die Siebfraktion 15 bis 40 µm für die weiteren Versuche verwendet.

### B. Sphäroidisieren eines Mo-C bzw. W-C Granulats

Zunächst wurde ein Schlicker aus
- Rohpulver, bestehend aus Mo- bzw. W-Pulver und Flammruß,
- Paraffin und
- Wasser
durch Mischen hergestellt. Der Schlicker enthielt ca. 75 Ma% Pulver, 0,75 Ma% Paraffin und als Rest Wasser. Der Schlicker wurde intensiv gerührt, um eine homogene Konzentration des Gemisches aufrecht zu erhalten und dann sprühgetrocknet. Dabei wurde der Schlicker mit 3 bar durch eine Düse in das Innere eines Sprühturmes unter Tropfenbildung gesprüht und im Stickstoffstrom getrocknet (Stickstoff-Einlasstemperatur: 240°C, Auslasstemperatur: 160°C). Das so hergestellte agglomerierte Pulver wurde 1 h in einem Aluminiumoxidschiffchen in einem Ofen unter Wasserstoff bei einer Temperatur von 1100°C geglüht und dabei entbindert. Danach wurde das Pulver gebrochen und der Grobanteil abgesiebt.

C. Molybdänpulver mit einer mittleren Partikelgröße von 4,2 µm (d₅₀, bestimmt durch LDA - Laser Diffraction Analysis) wurde in einem Schermischer mit Flammruß vermengt und durch Zugabe von Polyvinylalkohol und Aceton in einen Schlicker übergeführt. Die Granulatherstellung erfolgte durch Sprühtrocknen. Dabei wurde der Schlicker durch eine Düse in das Innere eines Sprühturmes unter Tropfenbildung gesprüht, im Gegenstrom durch Stickstoff getrocknet und im unteren Teil des Turmes als Granulat gesammelt. Dem Granulat wurde durch langsames Erhitzen auf 1200°C der Binder entzogen.

Das so hergestellte Pulver wurde auf Kohlenstoff (Verbrennungsanalyse mit IR-Absorptionsmessung) und Sauerstoff (Trägergasheißextraktion) hin analysiert. Die charakteristischen Eigenschaften des Granulats sind in Tabelle 2 wiedergegeben.

**Tabelle 2**

| Nr. | Basismetall | Herstellmethode | Sauerstoffgehalt [At%] | Kohlenstoffgehalt [At%] |
|---|---|---|---|---|
| 1 | Mo | A | 0,36 | 0,62 |
| 2 | Mo | A | 0,26 | 3,2 |
| 3 | Mo | B | 0,19 | 17,0 |
| 4 | W | A | 0,26 | 0,23 |
| 5 | W | A | 0,22 | 7,3 |
| 6 | W_{*} | A | 0,18 | 24,2 |
| 7 | Mo-W-Mischung (70 At% Mo; 30 At% W) | B | 0,37 | 1,4 |
| 8 | Mo | C | 0,43 | 3,1 |

| | | | | |
|---|---|---|---|---|
| * aufgrund eines zu geringen Molybdängehalts nicht mehr Teil der Erfindung | | | | |

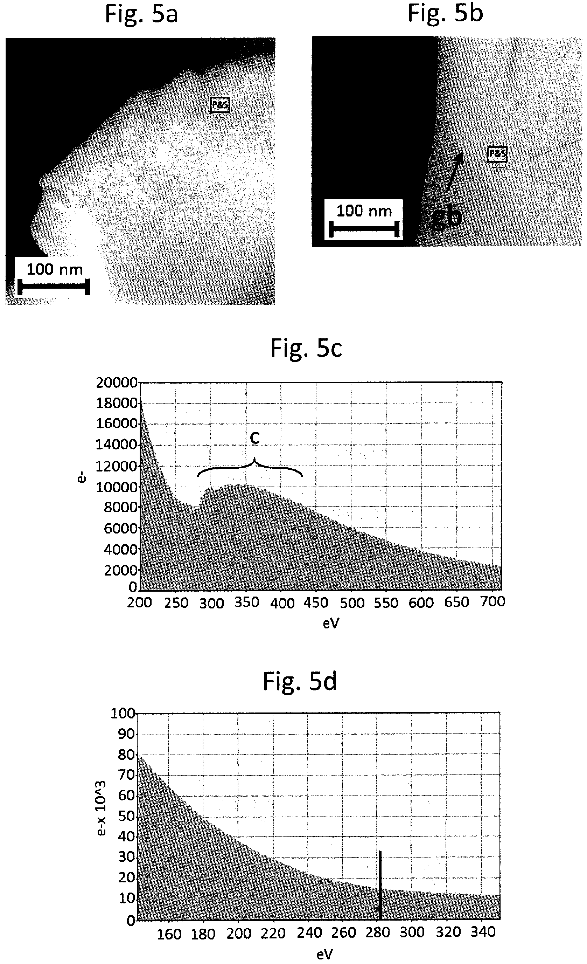

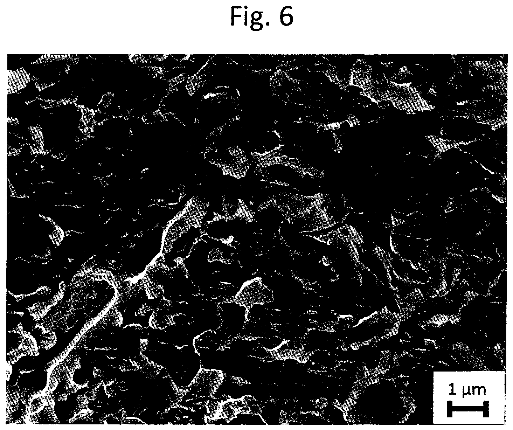

Die Pulver 1 bis 8 wurden mittels einer 400 W SLM Anlage zu Proben mit der Dimension 10mm x 10mm x 10mm sowie zu Kerbschlagbiegeproben gemäß DIN EN ISO 148-1 verarbeitet. Die Kerbschlagbiegeproben wurden dabei mit nach oben zeigender Kerbe auf der Grundplatte aufgebaut. Damit ist eine, durch den Kerbschlagbiegeversuch erzeugte Bruchfläche parallel zur Aufbaurichtung. Der SLM-Prozess wurde unter den gleichen Bedingungen, wie für die Proben gemäß Stand der Technik beschrieben, durchgeführt. Die Proben wurden wiederum durch Drahterosion von der Grundplatte abgetrennt und die Dichte durch die Auftriebsmethode bestimmt, wobei offene Porosität durch Tauchen in geschmolzenes Paraffin verschlossen wurde. Bei den Mo-C Proben wurden Dichten im Bereich von 97,1 bis 98,6 %, bei W-C von 96,9 bis 98,4 % und bei Mo-W-C von 96,1 % der theoretischen Dichte bestimmt. Von den Proben wurden Schliffe angefertigt, die Kerbschlagproben gemäß DIN EN ISO 148-1 geprüft, die Bruchfläche rasterelektronenmikroskopisch und Dünnschliffe mittels TEM sowie EELS untersucht. In Fig. 4a und 4b ist am Beispiel der Probe 3 die Mikrostruktur der erfindungsgemäßen Proben wiedergegeben. In Fig. 4a ist die Schliffebene senkrecht zur Aufbaurichtung. Die Schliffebene ist damit parallel zur Grundplatte. Der Bauteil ist rissfrei und weist ein sehr feinkörniges Gefüge auf. Die Korngrenzen sind verzahnt, was einen interkristallinen Bruch erschwert. Fig. 4b zeigt das Gefüge in einer Ebene parallel zur Aufbaurichtung. Die Kornstruktur ist globular mit einem mittleren Kornstreckungsverhältnis (GAR-Wert) von nahe 1. TEM-Aufnahmen (siehe beispielsweise Fig. 5a und 5b) dieser Probe zeigen, dass feinste Mo-Karbide (siehe Fig. 5a mit EELS Ergebnis in Fig. 5c) in einer reinen Mo-Matrix (siehe Fig. 5b mit EELS Ergebnis in Fig. 5d) eingebettet sind. Die EELS-Ergebnisse in 5c wurden an dem in 5a eingezeichneten Messpunkt aufgenommen. Die ausgeprägte Schulter in 5c, im Bereich zwischen 300 bis ca. 450 eV, resultiert aus dem in Form von Mo-Karbiden vorliegendem Kohlenstoff. Die EELS-Ergebnisse in 5d wurden an dem in 5b eingezeichneten Messpunkt aufgenommen. In 5d ist im Bereich von 300 bis 450eV kein durch Kohlenstoff verursachter Peak erkennbar - es handelt sich somit um reines Mo. Die feine Karbid-Verteilung in der Mo-Matrix gewährleistet, dass thermisch induzierte Spannungen in der weichen Mo-Matrix durch Verformung abgebaut werden können. Die durch den Kerbschlagbiegeversuch erzeugte Bruchfläche von Probe 3 ist in Fig. 6 wiedergegeben. Die erzeugte Bruchfläche ist parallel zur Aufbaurichtung. Der Bruch ist transkristallin ohne interkristalline Anteile.

Die Ergebnisse der chemischen Analyse sind in Tabelle 3 wiedergegeben. Bei allen Proben konnte ein Sauerstoffgehalt von kleiner< 0,1 At% eingestellt werden.

**Tabelle 3**

| Nr. | Basismetall | Herstellmethode | Sauerstoffgehalt [At%] | Kohlenstoffgehalt [At%] |
|---|---|---|---|---|
| 1 | Mo | A | 0,07 | 0,32 |
| 2 | Mo | A | 0,008 | 0,6 |
| 3 | Mo | B | 0,002 | 16,6 |
| 4 | W | A | 0,09 | 0,09 |
| 5 | W | A | 0,01 | 5,1 |
| 6 | W_{*} | A | 0,005 | 23,5 |
| 7 | Mo-W-Mischung (70 At% Mo; 30 At% W) | B | 0,07 | 1,0 |
| 8 | Mo | C | 0,09 | 2,7 |

| | | | | |
|---|---|---|---|---|
| * aufgrund eines zu geringen Molybdängehalts nicht mehr Teil der Erfindung | | | | |

## Patentansprüche

1. Bauteil, umfassend eine Vielzahl einzelner, über ein Additives Fertigungsverfahren durch einen energiereichen Strahl zu einer festen Struktur zusammengeschmolzener Pulverpartikel aus Molybdän, einer Molybdän-basierten Legierung mit einem Molybdängehalt von zumindest 80 At%, Wolfram oder einer Wolfram-basierten Legierung mit einem Wolframgehalt von zumindest 80 At%,
**dadurch gekennzeichnet,**
**dass** das Bauteil einen Sauerstoffgehalt kleiner oder gleich 0,1 At% und einen Kohlenstoffgehalt größer oder gleich 0,08 At% aufweist, wobei optional das Bauteil einen Kohlenstoffgehalt kleiner oder gleich 25 At% aufweist und optional die Summe metallischer Legierungselemente kleiner oder gleich 2 At% ist, wobei in diesem Wert Molybdän als Legierungselement in Wolfram bzw. Wolfram als Legierungselement in Molybdän nicht enthalten ist.

2. Bauteil nach Anspruch 1, wobei das Bauteil einen Kohlenstoffgehalt kleiner oder gleich 25 At% aufweist.

3. Bauteil nach Anspruch 1 oder 2, wobei der Kohlenstoffgehalt (in At%) größer oder gleich dem Sauerstoffgehalt (in At%) ist.

4. Bauteil nach einem der Ansprüche 1 bis 3, wobei das Bauteil Karbide aufweist, die in einer Matrix aus Rein-Molybdän bzw. Rein-Wolfram eingebettet sind.

5. Bauteil nach einem der Ansprüche 1 bis 4, wobei mehr als 25 At%, bezogen auf den Gesamtanteil an enthaltenen Kohlenstoff, als Molybdän- oder Wolframkarbid vorliegen.

6. Bauteil nach einem der vorhergehenden Ansprüche, wobei das Bauteil in einer Bruchebene parallel zur Aufbaurichtung an mindestens 50 % der Bruchfläche ein transkristallines Bruchverhalten aufweist, wobei der transkristalline Bruchanteil über Mikroskopie-Aufnahmen der durch einen Kerbschlagbiegeversuch gemäß DIN EN ISO 148-1 erzeugten Bruchfläche im Rasterelektronenmikroskop auswertbar ist.

7. Bauteil nach einem der vorhergehenden Ansprüche, wobei das Bauteil in einer Bruchebene senkrecht zur Aufbaurichtung an mindestens 50 % der Bruchfläche ein transkristallines Bruchverhalten aufweist, wobei der transkristalline Bruchanteil über Mikroskopie-Aufnahmen der durch einen Kerbschlagbiegeversuch gemäß DIN EN ISO 148-1 erzeugten Bruchfläche im Rasterelektronenmikroskop auswertbar ist.

8. Bauteil nach einem der vorhergehenden Ansprüche, wobei das Bauteil frei von intermetallischen Phasen ist.

9. Bauteil nach einem der vorhergehenden Ansprüche, wobei die Summe metallischer Legierungselemente kleiner oder gleich 2 At% ist, wobei in diesem Wert Molybdän als Legierungselement in Wolfram bzw. Wolfram als Legierungselement in Molybdän nicht enthalten ist.

10. Bauteil nach einem der vorhergehenden Ansprüche, wobei der mittlere GAR-Wert in einer Ebene parallel zur Aufbaurichtung kleiner 5 ist; wobei der GAR-Wert eine Kornstreckung als Verhältnis von Kornlänge zu Kornbreite angibt und durch Bildanalyse bestimmbar ist, indem die mittlere Kornlänge und die mittlere Kornbreite bestimmt werden und in weiterer Folge die mittlere Kornlänge durch die mittlere Kornbreite dividiert wird.

11. Additives Fertigungsverfahren zur Herstellung eines Bauteils gemäß einem der Ansprüche 1 bis 10 aufweisend nachfolgende Schritte:
- Bereitstellen eines Ausgangspulvers, das Partikel aus Molybdän, einer Molybdän-basierten Legierung, Wolfram oder einer Wolfram-basierten Legierung aufweist, wobei die Partikel über die Schmelzphase hergestellt sind und das Pulver einen Kohlenstoffgehalt im Bereich von größer oder gleich 0,15 At% und kleiner oder gleich 25 At% aufweist;
- Lagenweises Zusammenschmelzen der Partikel des Ausgangspulvers mit einem energiereichen Strahl.

12. Additives Fertigungsverfahren nach Anspruch 11, wobei der Schritt des Bereitstellens des Ausgangspulvers ein Karburieren sowie ein Sphäroidisieren in der Schmelzphase umfasst, wobei der Schritt des Karburierens vor, während oder nach dem Schritt des Sphäroidisierens durchgeführt wird.

13. Additives Fertigungsverfahren nach Anspruch 12, wobei das Sphäroidisieren in der Schmelzphase in C-haltiger Atmosphäre in einem Plasma erfolgt.

14. Additives Fertigungsverfahren nach einem der Ansprüche 11 bis 13, wobei der Schritt des Bereitstellens des Ausgangspulvers ein Granulieren eines Rohpulvers, dem eine kohlenstoffhaltige Substanz zugesetzt ist, umfasst.

15. Additives Fertigungsverfahren nach einem der Ansprüche 11 bis 14, wobei beim Schritt des lagenweisen Zusammenschmelzens dem herzustellenden Bauteil zusätzlich thermische Energie zugeführt wird.

16. Verwendung eines Pulvers, das Partikel aus Molybdän, einer Molybdän-basierten Legierung, Wolfram oder einer Wolfram-basierten Legierung aufweist, wobei die Partikel granuliert und/oder über die Schmelzphase hergestellt sind und das Pulver einen durchschnittlichen Kohlenstoffgehalt im Bereich von größer oder gleich 0,15 At% und bevorzugt kleiner oder gleich 25 At% aufweist, für ein Additives Fertigungsverfahren gemäß einem der Ansprüche 11 bis 15.

17. Verwendung nach Anspruch 16, wobei das Additive Fertigungsverfahren selektives Laserschmelzen, selektives Elektronenstrahlschmelzen oder Laser Metal Deposition ist.

## Claims

1. Component comprising a plurality of individual powder particles of molybdenum, a molybdenum-based alloy containing at least 80 at% molybdenum, tungsten or a tungsten-based alloy containing at least 80 at% tungsten, which powder particles have been fused together by a high energy beam via an additive manufacturing process to obtain a solid structure,
**characterized in that**
the component has an oxygen content of not more than 0.1 at% and a carbon content of not less than 0.08 at%, wherein optionally the component has a carbon content of not more than 25 at% and optionally the sum total of metallic alloy elements is not more than 2 at%, where this value does not include molybdenum as alloy element in tungsten or tungsten as alloy element in molybdenum.

2. Component according to claim 1, **characterized in that** the component has a carbon content of not more than 25 at%.

3. Component according to claim 1 or 2, **characterized in that** the carbon content (in at%) is not less than the oxygen content (in at%).

4. Component according to any of claims 1 to 3, **characterized in that** the component includes carbides embedded in a matrix of pure molybdenum or pure tungsten.

5. Component according to any of claims 1 to 4, **characterized in that** more than 25 at%, based on the total content of carbon present, is present as molybdenum carbide or tungsten carbide.

6. Component according to any of the preceding claims, **characterized in that** the component in a fracture plane parallel to the direction of construction has transcrystalline fracture characteristics over at least 50% of the fracture area, wherein the proportion of transcrystalline fracture can be evaluated by microscope images of the fracture surface generated by a notched impact bending test according to DIN EN ISO 148- 1 in a scanning electron microscope.

7. Component according to any of the preceding claims, **characterized in that** the component in a fracture plane at right angles to the direction of construction has transcrystalline fracture characteristics over at least 50% of the fracture area, wherein the proportion of transcrystalline fracture can be evaluated by microscope images of the fracture surface generated by a notched impact bending test according to DIN EN ISO 148- 1 in a scanning electron microscope.

8. Component according to any of the preceding claims, **characterized in that** the component is free of intermetallic phases.

9. Component according to any of the preceding claims, **characterized in that** the sum total of metallic alloy elements is not more than 2 at%, where this value does not include molybdenum as alloy element in tungsten or tungsten as alloy element in molybdenum.

10. Component according to any of the preceding claims, **characterized in that** the average GAR value in a plane parallel to the direction of construction is less than 5, wherein the GAR value denotes a ratio of grain length to grain width and can be determined by image analysis by determining the average grain length and the average grain width and subsequently dividing the average grain length by the average grain width.

11. Additive manufacturing method for production of a component according to one of the claims 1-10 having the following steps:
- providing a starting powder including particles of molybdenum, of a molybdenum-based alloy, tungsten or a tungsten-based alloy, where the particles have been produced via the melt phase and the powder has a carbon content in the region of not less than 0.15 at% and not more than 25 at %;
- layer-by-layer fusion of the particles of the starting powder with a high-energy beam.

12. Additive manufacturing method according to claim 11, **characterized in that** the step of providing the starting powder comprises carburization and spheroidization in the melt phase, the step of carburization being effected before, during or after the step of spheroidization.

13. Additive manufacturing method according to claim 12, **characterized in that** the spheroidization in the melt phase is effected in C-containing atmosphere in a plasma.

14. Additive manufacturing method according to any of claims 11 to 13, **characterized in that** the step of providing the starting powder comprises granulation of a raw powder to which a carbonaceous substance has been added.

15. Additive manufacturing method according to any of claims 11 to 14, **characterized in that** the step of layer-by-layer fusion involves additionally supplying thermal energy to the component to be produced.

16. Use of a powder comprising particles of molybdenum, a molybdenum-based alloy, tungsten or a tungsten-based alloy, where the particles have been produced via granulation and/or the melt phase and the powder has an average carbon content in the region of not less than 0.15 at% and preferably not more than 25 at% for an additive manufacturing method according to one of the claims 11 - 15.

17. Use according to claim 16, **characterized in that** the additive manufacturing method is selective laser melting, selective electron beam melting or laser metal deposition.

## Revendications

1. Composant, comprenant une multitude de particules de poudre individuelles, fondues ensemble en une structure solide par un rayonnement riche en énergie par l'intermédiaire d'un procédé de fabrication additive, en molybdène, en un alliage à base de molybdène présentant une teneur en molybdène d'au moins 80% en atome, en tungstène ou en un alliage à base de tungstène présentant une teneur en tungstène d'au moins 80% en atome, **caractérisé en ce que** le composant présente une teneur en oxygène inférieure ou égale à 0,1% en atome et une teneur en carbone supérieure ou égale à 0,08% en atome, le composant présentant éventuellement une teneur en carbone inférieure ou égale à 25% en atome et la somme des éléments d'alliage métalliques étant éventuellement inférieure ou égale à 2% en atome, le molybdène en tant qu'élément d'alliage dans le tungstène ou, selon le cas, le tungstène en tant qu'élément d'alliage dans le molybdène n'étant pas contenu dans cette valeur.

2. Composant selon la revendication 1, le composant présentant une teneur en carbone inférieure ou égale à 25% en atome.

3. Composant selon la revendication 1 ou 2, la teneur en carbone (en% en atome) étant supérieure ou égale à la teneur en oxygène (en% en atome).

4. Composant selon l'une quelconque des revendications 1 à 3, le composant présentant des carbures qui sont incorporés dans une matrice en molybdène pur ou, selon le cas en tungstène pur.

5. Composant selon l'une quelconque des revendications 1 à 4, plus de 25% en atome, par rapport à la proportion totale de carbone contenu, se trouvant sous forme de carbure de molybdène ou de tungstène.

6. Composant selon l'une quelconque des revendications précédentes, le composant présentant, dans un plan de rupture parallèle à la direction de fabrication, sur au moins 50% de la surface de rupture, un comportement de rupture transcristallin, la proportion de rupture transcristalline pouvant être évaluée par l'intermédiaire de clichés microscopiques de la surface de rupture générée par un essai de flexion par choc sur éprouvette Charpy selon la norme DIN EN ISO 148-1 dans un microscope électronique à balayage.

7. Composant selon l'une quelconque des revendications précédentes, le composant présentant, dans un plan de rupture perpendiculaire à la direction de fabrication, sur au moins 50% de la surface de rupture, un comportement de rupture transcristallin, la proportion de rupture transcristalline pouvant être évaluée par l'intermédiaire de clichés microscopiques de la surface de rupture générée par un essai de flexion par choc sur éprouvette Charpy selon la norme DIN EN ISO 148-1 dans un microscope électronique à balayage.

8. Composant selon l'une quelconque des revendications précédentes, le composant étant exempt de phases intermétalliques.

9. Composant selon l'une quelconque des revendications précédentes, la somme des éléments d'alliage métalliques étant inférieure ou égale à 2% en atome, le molybdène en tant qu'élément d'alliage dans le tungstène ou, selon le cas, le tungstène en tant qu'élément d'alliage dans le molybdène, n'étant pas contenu dans cette valeur.

10. Composant selon l'une quelconque des revendications précédentes, la valeur GAR moyenne dans un plan parallèle à la direction de fabrication étant inférieure à 5 ; la valeur GAR indiquant un allongement de grain en tant que rapport de la longueur de grain à la largeur de grain et pouvant être déterminée par analyse d'image, en ce que la longueur moyenne de grain et la largeur moyenne de grain sont déterminées et la longueur moyenne de grain est ensuite divisée par la largeur moyenne de grain.

11. Procédé de fabrication additive pour la fabrication d'un composant selon un procédé selon l'une quelconque des revendications 1 à 10, présentant les étapes suivantes :
- mise à disposition d'une poudre de départ qui présente des particules en molybdène, en un alliage à base de molybdène, en tungstène ou en un alliage à base de tungstène, les particules étant fabriquées par l'intermédiaire d'une phase fondue et la poudre présentant une teneur en carbone dans la plage supérieure ou égale à 0,15% en atome et inférieure ou égale à 25% en atome ;
- fusion ensemble par couches des particules de la poudre de départ à l'aide d'un rayon riche en énergie.

12. Procédé de fabrication additive selon la revendication 11, l'étape de la mise à disposition de la poudre de départ comprenant une carburation ainsi qu'une sphéroïdisation dans la phase fondue, l'étape de la carburation étant réalisée avant, pendant ou après l'étape de sphéroïdisation.

13. Procédé de fabrication additive selon la revendication 12, la sphéroïdisation ayant lieu dans la phase fondue dans une atmosphère contenant C dans un plasma.

14. Procédé de fabrication additive selon l'une quelconque des revendications 11 à 13, l'étape de la mise à disposition de la poudre de départ comprenant une granulation d'une poudre brute qui est additionnée d'une substance contenant du carbone.

15. Procédé de fabrication additive selon l'une quelconque des revendications 11 à 14, le composant à fabriquer étant alimenté en plus en énergie thermique lors de l'étape de la fusion ensemble par couches.

16. Utilisation d'une poudre, qui présente des particules en molybdène, en un alliage à base de molybdène, en tungstène ou en un alliage à base de tungstène, les particules étant granulées et/ou fabriquées par l'intermédiaire de la phase fondue et la poudre présentant une teneur moyenne en carbone dans la plage supérieure ou égale à 0,15% en atome et de préférence inférieure ou égale à 25% en atome, pour un procédé de fabrication additive selon l'une quelconque des revendications 11 à 15.

17. Utilisation selon la revendication 16, le procédé de fabrication additive étant une fusion sélective par laser, une fusion sélective par rayon électronique ou un dépôt de métal au laser.
